Europäisches Patentamt

European Patent Office    (11) Publication number:    **0 049 635**

Office européen des brevets                            **A1**

(19)

(12)    # EUROPEAN PATENT APPLICATION

(21) Application number: **81304630.7**    (51) Int. Cl.³: **B 27 B 5/00**
                                               **B 27 B 29/08, B 23 Q 3/02**
(22) Date of filing: **06.10.81**

(30) Priority: **08.10.80 AU 5942/80**    (71) Applicant: **INTEGRAL BUILDING TECHNICS PTY. LTD.**
                                               **C/- C.E. Smith & Co. 85, Denham Street**
                                               **Townsville Queensland 4810(AU)**

(43) Date of publication of application:    (72) Inventor: **Goffinet, Jean-Marie**
**14.04.82 Bulletin 82/15**                   **15 Fleming Street Aitkenvale**
                                               **Townsville Queensland 4814(AU)**

(84) Designated Contracting States:
**AT BE CH DE FR GB IT LI LU NL SE**    (74) Representative: **Warren, Anthony Robert et al,**
                                               **BARON & WARREN 18 South End Kensington**
                                               **London W8 5BU(GB)**

(54) **Timber machining device.**

(57) A machine (10) to carry out work operations on a length
of timber (11) includes a stationary frame (12), to which a
beam (18) is fixed, and a movable frame (14) mounted on the
stationary frame (12) for movement relative thereto in a
predetermined direction, said movable frame (14) being
adapted to receive and securely support said length of
timber (11) in an orientation generally horizontally trans-
verse of said direction. A rotary cutting saw (29) is mounted
on the beam (18) of said stationary frame (12), and is adapted
to cut said timber (11) length upon said timber length being
brought into contact therewith by movement of said mov-
able frame (14).

FIG.3

FIG.1

Croydon Printing Company Ltd.

## "TIMBER MACHINING DEVICE"

The present invention relates to machinery to perform work on timber lengths, which timber lengths may be assembled to provide frames for buildings suitable for high wind areas.

It has been found advantageous to provide pre-cut lengths which may be transported to a work site, and then assembled to provide a timber frame for a building. In order for the frame to be assembled "on-site" the individual lengths must be accurately cut. In the present instance the lengths are connected by metal plates extending into the length, which plates are coupled to abutting lengths by pins, as described in Australian Patent Applications PE 1850 and PE 3497.

It is a particular problem of prior machines that the timber lengths are not accurately machined as they are not held securely so as to be prevented from deflecting during machining.

It is an object of the present invention to provide a machine which will accurately provide the various slots and holes required in the timber length.

There is disclosed herein a machine to carry out work operations on a timber length, said machine comprising:

(a) a main stationary frame;

(b) a secondary frame mounted on said main frame for movement in a predetermined direction relative thereto, said secondary frame being adapted to receive said timber length so as to extend generally transverse of said direction;

(c) means to move said secondary frame from a retracted position to a forward position in said predetermined direction while maintaining the direction of extension of said timber length generally constant;

(d) timber cutting means mounted on said main frame and positioned so as to cuttingly engage said timber length when in said forward position, but to be clear of said timber length when said length is in the retracted position; and

(e) clamp means to releasably secure said timber length to said secondary frame to prevent relative movement therebetween.

A preferred form of the present invention will now be

- 2 -

described by way of example with reference to the accompanying drawings, wherein:

Figures 1 and 2 schematically illustrate in end elevation a machine to perform work on timber lengths;

Figure 3 is a schematic perspective view of a portion of the machine of Figures 1 and 2, equipped with a circular saw cutting blade adapted to penetrate timber lengths;

Figure 4 is a front schematic view of the main frame of the machine of Figures 1 and 2;

Figure 5 is a schematic top plan of the frame of Figure 4;

Figure 6 schematically depicts a clamp which may be used with the machine of Figures 1 and 2 adapted to secure timber lengths to the frame of Figures 4 and 5; and

Figure 7 is a schematic end view of the clamp of Figure 6.

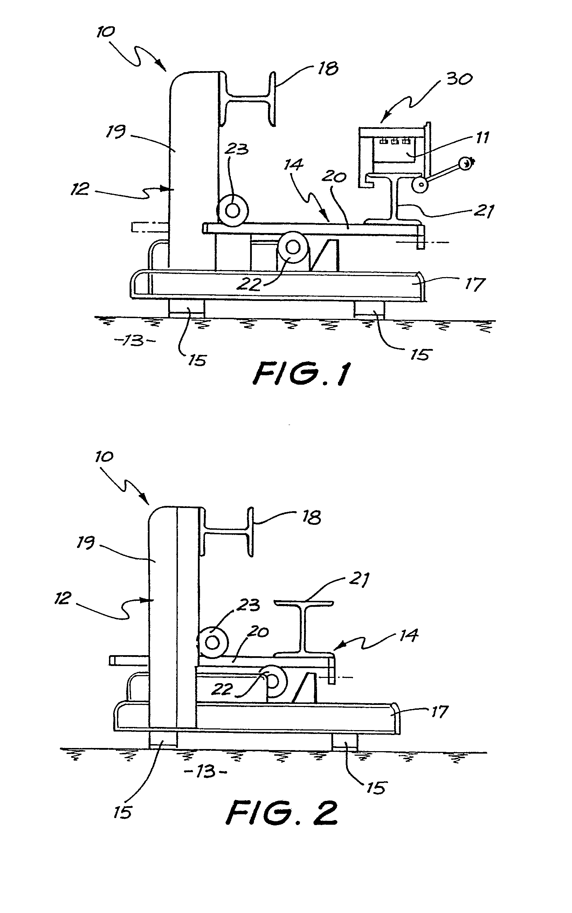

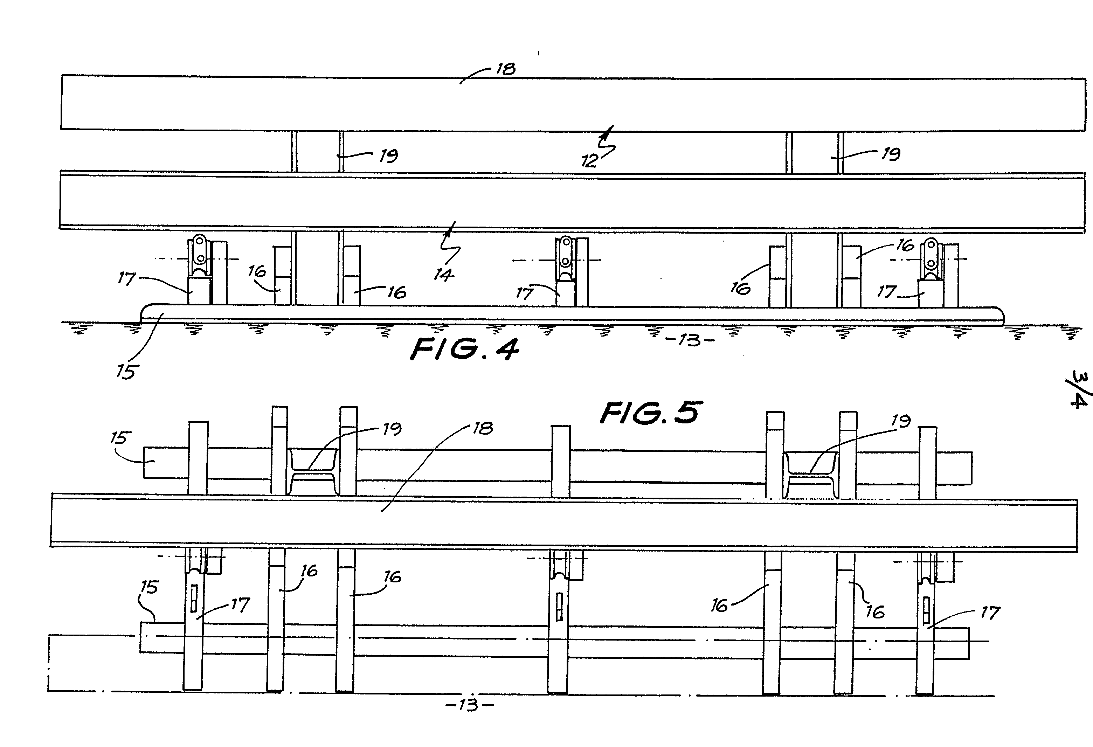

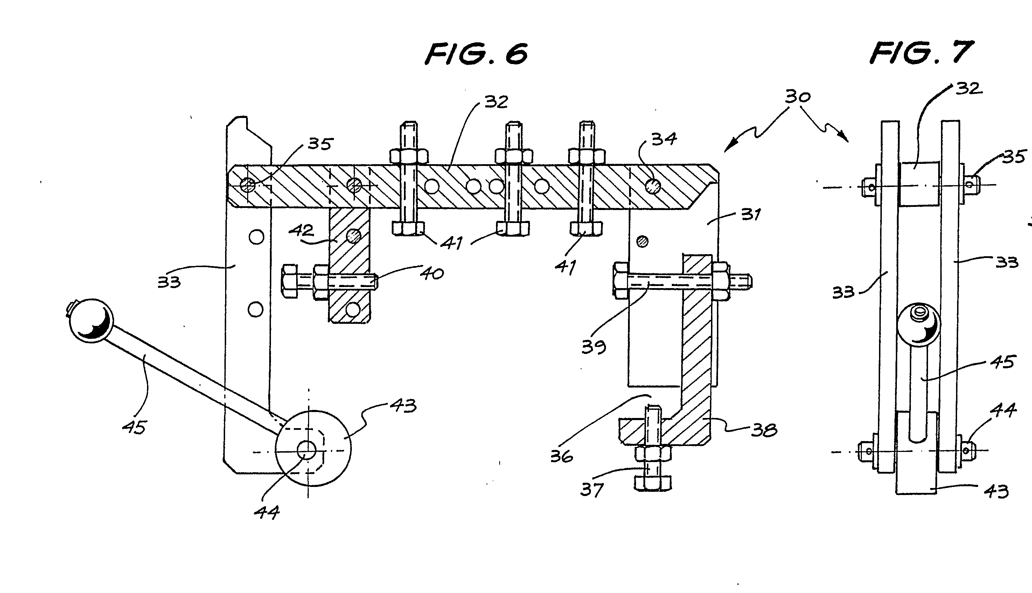

The machine 10 of Figures 1 and 2 is adapted to receive lengths of timber 11 and perform cutting operations thereon at longitudinally spaced locations of the timber length 11. The machine 10, as can further be seen in Figures 4 and 5, has a main frame 12 adapted to be fixed stationary on the work shop floor 13. Movably mounted on the main frame 12 is a secondary frame 14 upon which the timber length 11 is mounted.

The main frame 12 consists of two floor rails 15 to which are fixed six beam supports 16 and 17, with the supports 16 adapted to support the upper beam 18 via vertical members 19. The supports 17 are adapted to movably support the secondary frame 14.

The second frame 14 comprises arms 20 to which is securely fixed a timber receiving beam 21. The arms 20 are movably supported by rollers 22 and 23 fixed to the supports 17. The rollers 22 are adapted to engage the low surfaces of the arms 20 while the rollers 23 are adapted to engage the upper surfaces of the arms 20. It should be appreciated that the centre of gravity of the secondary frame 14 is located at all times to the right of the rollers 22 (as seen in Figures 1 and 2). A drive means is employed to move the secondary frame 14, relative to the main frame 12, between a forward position (Figure 2) and a retracted position (Figure 1). This drive means could include a gear train, a cable system, or hydraulic or pneumatic rams, which would cause movement of the secondary frame 14 so that the beams 18 and 21 remain parallel.

It should be noted that the beams 18 and 21 are of considerable size, and therefore strength, to inhibit bending of the beams during working operations. Accordingly it has been found advantageous to use "I-beams" to form the beams 18 and 21.

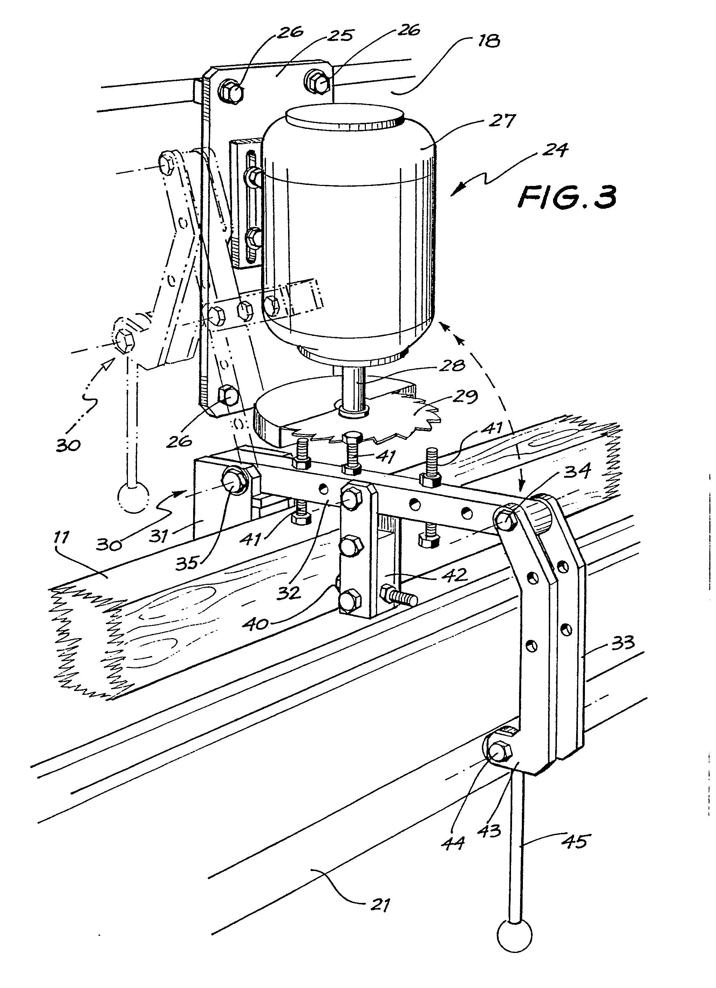

Further now to Figure 3, wherein there is schematically illustrated a cutting unit 24 attached to the beam 18. It should be appreciated that any desired number of the units 24 may be located on the beam 18 according to the number of cuts to be made in the timber length 11. It should further be appreciated that the units 24 are adjustably located on the beam 18 so as to be movable longitudinally thereof to place the cuts in the timber length 11 at desired locations. Additionally, the cutting unit 24 could be replaced with a drilling unit if so desired.

The cutting unit 24 consists of a mounting plate 25 which is attached to the beam 18 by bolt 26. Fixed to the plate 25 is an electric motor 27 having an output driven shaft 28. Mounted on the shaft 28, so as to be driven thereby, is a circular cutting blade 29. The cutting units 24 are so located that they penetrate the timber length 11 when the secondary frame 14 is moved to the forward position, but is clear of the timber length 11 when the secondary frame is in the retracted position.

There is also depicted in detail in Figures 3, 6 and 7 the clamp 30 which is adapted to secure the timber length 11 to the beam 21. Any desired number of clamps 30 may be used as required.

The clamp 30 consists of three links 31, 32 and 33 which are pivotally coupled by pins 34 and 35. In a clamping position the links 31, 32 and 33 define a generally U-shaped configuration with the link 31 being fixed to the beam 21 by having one of its flanges fixed within the gap 36 and clampingly engaged by bolt 37. The bolt 37 threadably engages bracket 38 which is welded to link 31. The clamp 30 defines the U-shaped configuration so as to encompass the timber length 11 with the timber located between links 31 and 33. However, the timber length 11 is actually engaged by adjustably located bolts 39 and 40 which are adapted to abut the longitudinally extending side surfaces of the timber length 11. The link 32 has a plurality of adjustable bolts 41 adapted to abut the upper surface of the timber length 11. The bolt 40 is secured stationary relative to the link 32 by bracket 42. The extremity of link 33 is provided with an eccentrically mounted cam 43 which is rotatably attached to the link 33 by a pin 44. Attached to the cam 43 so as to enable the cam 43 to be moved by an operator, is a handle 45.

In operation the clamp 30 is placed around the timber length 11 and the cam 43 located below the lower surface of the upper flange of the beam 21. Upon rotation of the cam 43 by an operator the link 32 is pushed down toward the top surface of the timber length to thereby securely attach the timber length 11 to the beam 21. Additionally the clamping force is sufficient to straighten the timber length 11 and eliminating any twisting of the timber length 11.

To enable the timber length 11 to be located on and withdrawn from the beam 21 the clamp 30, by consisting of a series of links which are pivotally coupled, is re-arrangeable so as to be moved to the ghosted position illustrated in Figure 3.

CLAIMS

1.     A machine to carry out work operations on a timber length, said machine (10) being characterised by:

(a) a main stationary frame (12);

(b) a secondary frame (14) mounted on said main frame (12) for movement in a predetermined direction relative thereto, said secondary frame (14) being adapted to receive said timber length (11) so as to extend generally transverse of said direction;

(c) means to move said secondary frame from a retracted position to a forward position in said predetermined direction while maintaining the direction of extension of said timber length generally constant;

(d) timber cutting means (24) mounted on said main frame (12) and positioned so as to cuttingly engage said timber length (11) when in said forward position, but to be clear of said timber length when said length is in the retracted position; and

(e) clamp means (30) to releasably secure said timber length to said secondary frame to prevent relative movement therebetween.

2.     The machine of claim 1, wherein said secondary frame (14) includes a generally rigid beam (21) extending horizontally transverse of said predetermined direction and adapted to receive said timber length (11).

3.     The machine of claim 2, wherein said clamp means (30) includes a plurality of clamps to be located at spaced locations along said beam (21).

4.     The machine of claim 3, wherein said clamp means (30) comprises:

a first link (31) engaged at one end to said beam (21) and extending generally vertically from an edge of said beam,

a second link (32) pivotally coupled at one end to the other end of said first link (31) so as to be pivotably movable from a raised position to a generally horizontal clamping position extending over said timber length (11),

a third link (33) pivotally coupled to the other end of said second link (32) so as to be movable from a release position to a generally vertical clamping position,

and cam means (43) mounted on the other end of said third link (33) and adapted to engage said beam (21) to place said third link (33) under tension to thereby cause said second link (32) to clamp said length (11) to said beam (21).

5. The machine of claim 4, wherein said clamp means (30) includes a projection (40, 42) depending from said second link (32) and positioned so as to sandwich said timber length (11) between said first link (31) and said projection (40, 42).

6. A machine to carry out operations on a timber length substantially as hereinbefore described with reference to the accompanying drawings.

1/4

0049635

FIG.1

FIG.2

FIG.3

FIG.4

FIG.5

0049635

FIG. 6

FIG. 7

**European Patent Office**

**EUROPEAN SEARCH REPORT**

Application number

EP 81 30 4630.7

| Category | DOCUMENTS CONSIDERED TO BE RELEVANT | Relevant to claim | CLASSIFICATION OF THE APPLICATION (Int. Cl.³) |
|---|---|---|---|
| | Citation of document with indication, where appropriate, of relevant passages | | |
| | US - A - 3 552 254 (R.L. MARCZY) <br> * column 1, lines 64 to 75; column 2, line 26 to column 3, line 21; fig. 1,2 * | 1 | B 27 B 5/00 <br> B 27 B 29/08 <br> B 23 Q 3/02 |
| | US - A - 4 174 917 (C.J. BROWER) <br> * column 2, line 24 to column 3, line 40; fig. 1 * | 1 | |
| | US - A - 3 301 548 (P.W. RATHBUN) <br> * column 1, line 26 to column 2, line 68; fig. 1 to 3 * | 4 | **TECHNICAL FIELDS SEARCHED (Int. Cl.³)** |
| | US - A - 2 581 040 (W. MULLENBACH) <br> * complete document * | 4 | B 22 C 21/00 <br> B 23 B 47/00 <br> B 23 D 47/00 <br> B 23 Q 1/00 <br> B 23 Q 3/00 <br> B 25 B 5/00 |
| | DE - C - 454 329 (A. TRUBE et al.) <br> * page 1, line 58 to page 2, line 21; fig. 3,4 * | 4 | B 27 B 5/00 <br> B 27 B 25/00 <br> B 27 B 29/00 <br> B 27 C 1/00 <br> B 27 C 5/00 |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | | |
|---|---|---|---|
| X | The present search report has been drawn up for all claims | | |

| Place of search | Date of completion of the search | Examiner |
|---|---|---|
| Berlin | 18-12-1981 | LEMBLE |

EPO Form 1503.1 06.78